# EUROPEAN PATENT APPLICATION

(11) **EP 4 723 618 A1**
(43) Date of publication of application: **08.04.2026**
(21) Application number: 25202180.3
(22) Date of filing: 15.09.2025
(51) Int. Cl.: H04N 7/18, G06V 20/52, G06V 20/56, B62D 65/18

(54) **VEHICLE MONITORING SYSTEM**

(30) Priority: 03.10.2024 JP 2024174061
(71) Applicant: TOYOTA JIDOSHA KABUSHIKI KAISHA, Toyota-shi, Aichi-ken 471-8571 (JP)
(72) Inventor: OKA, Yuhei, Toyota-shi, 471-8571 (JP); CHIBA, Hiroya, Toyota-shi, 471-8571 (JP)
(74) Representative: J A Kemp LLP

(57) **Abstract**

A vehicle monitoring system (50) includes: a plurality of first cameras each configured to capture an image of a corresponding one of a plurality of first divided areas that constitute a first area (A1); a plurality of second cameras each configured to capture an image of a corresponding one of a plurality of second divided areas that constitute a second area (B1); a first image analysis unit (206) configured to analyze the captured images captured by the plurality of respective first cameras; a second image analysis unit (207) configured to extract the captured image including a vehicle (100) from among the captured images captured by the plurality of respective second cameras and analyze the extracted captured image; and a monitoring unit (208) configured to monitor the plurality of vehicles (100) based on a result of the analysis of the images.

## Description

### BACKGROUND

The present disclosure relates to a vehicle monitoring system.

A vehicle monitoring system, which monitors a plurality of vehicles during assembly in a factory or the like, is required to reduce the load on monitoring processing without degrading the accuracy of monitoring the plurality of vehicles. As a related technology, Patent Literature 1 discloses an apparatus for remotely controlling a mobile body.

[Patent Literature 1] Japanese Patent No. 7424535

### SUMMARY

A monitoring system which monitors a plurality of vehicles is required to reduce the load on monitoring processing without degrading the accuracy of monitoring the plurality of vehicles.

The present disclosure has been made in view of the aforementioned circumstances and an object thereof is to provide a vehicle monitoring system capable of reducing the load on monitoring processing.

A vehicle monitoring system according to the present disclosure includes: a plurality of first cameras each configured to capture an image of a corresponding one of a plurality of first divided areas that constitute a first area where a plurality of vehicles continuously move; a plurality of second cameras each configured to capture an image of a corresponding one of a plurality of second divided areas that constitute a second area where a plurality of vehicles intermittently move; a first image analysis unit configured to analyze the captured images captured by the plurality of respective first cameras; a second image analysis unit configured to extract the captured image including the vehicle from among the captured images captured by the plurality of respective second cameras and analyze the extracted captured image; and a monitoring unit configured to monitor the plurality of vehicles based on a result of the analysis of the images by each of the first image analysis unit and the second image analysis unit. In the vehicle monitoring system according to the present disclosure, processing for analyzing captured images in an area where a plurality of vehicles intermittently move one by one is limited as compared to processing for analyzing captured images in an area where a plurality of vehicles continuously move in formation, whereby it is possible to reduce the load on the image analysis processing, that is, the load on monitoring processing.

The second image analysis unit may be configured to extract only the captured image including the vehicle from among the captured images captured by the plurality of respective second cameras and analyze the extracted captured image.

The first area may be an area where predetermined work is performed on each of the plurality of vehicles, and the second area may be an area through which each of the plurality of vehicles passes without predetermined work being performed on each of the plurality of vehicles.

The second image analysis unit may be configured to analyze the captured image with a resolution lower than a resolution with which the first image analysis unit analyzes the captured image.

Each of the plurality of vehicles may be configured to be movable by unmanned driving.

According to the present disclosure, it is possible to provide a vehicle monitoring system capable of reducing the load on monitoring processing.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a part of a vehicle monitoring system according to a first embodiment;
Fig. 2 is a block diagram showing a control system of the vehicle monitoring system according to the first embodiment;
Fig. 3 is a diagram for explaining a traveling control of a vehicle;
Fig. 4 is a control block diagram for explaining a traveling control example 1;
Fig. 5 is a flowchart for explaining the traveling control example 1;
Fig. 6 is a control block diagram for explaining a traveling control example 2; and
Fig. 7 is a flowchart for explaining the traveling control example 2.

### DESCRIPTION OF EMBODIMENTS

Specific embodiments to which the present disclosure is applied will be described hereinafter in detail with reference to the drawings. However, the present disclosure is not limited to the following embodiments. Further, for the clarification of the description, the following descriptions and the drawings are simplified as appropriate.

### <First Embodiment>

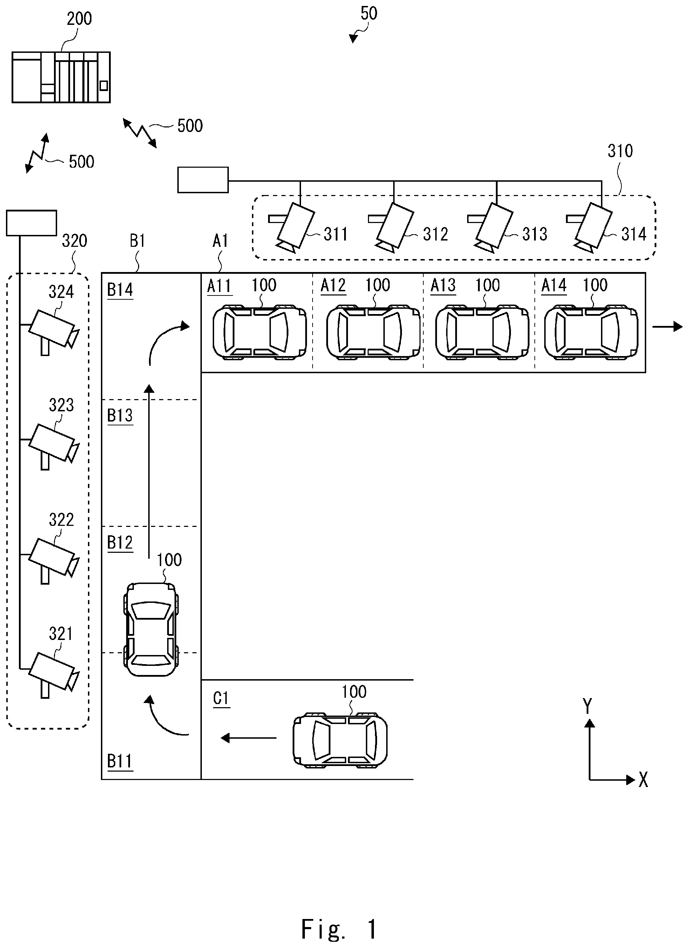

Fig. 1 is a schematic diagram showing a part of a vehicle monitoring system 50 according to a first embodiment. The vehicle monitoring system 50 is applied, for example, in a vehicle manufacturing factory which manufactures vehicles 100. In the example shown in Fig. 1, the vehicle monitoring system 50 monitors the vehicles 100 in an area A1 where predetermined work is performed for the vehicles 100 and an area B1 where predetermined work is not performed for the vehicles 100. Note that an XY orthogonal coordinate system is shown in Fig. 1 for the sake of explanation.

As shown in Fig. 1, the vehicle monitoring system 50 includes a server 200, cameras 310, and cameras 320. Fig. 1 also shows a plurality of the vehicles 100 to be monitored by the vehicle monitoring system 50. Each of the vehicles 100 is, for example, a self-propelled vehicle which can travel by itself during a manufacturing process. In other words, each of the vehicles 100 is, for example, a vehicle which can move by unmanned driving during a manufacturing process.

Each of the vehicles 100 is an unfinished vehicle in a manufacturing process. A worker (not shown) or a robot (not shown) performs predetermined work on each of the unfinished vehicles 100, which is moving along a predetermined moving route (traveling path), in each area of the manufacturing process, whereby each of the unfinished vehicles 100 is manufactured as a finished product. The predetermined work means assembly of parts, switch operations, welding, inspection, etc. In the example shown in Fig. 1, the area A1 and an area C1 are areas where predetermined work is performed on each of the vehicles 100, and the area B1 provided between the areas A1 and C1 is an area through which each of the vehicles 100 simply passes without predetermined work being performed on each of the vehicles 100.

The plurality of the vehicles 100 move in formation. For example, the plurality of the vehicles 100 move so that respective distances between the vehicles 100 are the same in each area. Note that, in the area A1 (a first area), since predetermined work is performed on each of the vehicles 100, the moving speed of each of the vehicles 100 is reduced. Therefore, the plurality of the vehicles 100 are likely to be densely located, and move continuously in formation. On the other hand, in the area B1 (a second area), since predetermined work is not performed on each of the vehicles 100, the moving speed of each of the vehicles 100 relatively increases. Therefore, the plurality of the vehicles 100 are unlikely to be densely located, and move intermittently one by one.

The cameras 310 are a group of cameras composed of a plurality of cameras, each of which is a kind of an external sensor 300, and capture images of the area A1 where predetermined work is performed on each of the vehicles 100. In the example shown in Fig. 1, the cameras 310 are a group of cameras composed of four cameras 311 to 314. The camera 311 captures an image of an area A11, which is a part of the area A1, the camera 312 captures an image of an area A12, which is a part of the area A1, the camera 313 captures an image of an area A13, which is a part of the area A1, and the camera 314 captures an image of an area A14, which is a part of the area A1. Each of the cameras 311 to 314 has a communication function and transmits data such as a captured image to the server 200 via a network 500.

The cameras 320 are a group of cameras composed of a plurality of cameras, each of which is a kind of the external sensor 300, and capture images of the area B1 through which each of the vehicles 100 simply passes. In the example shown in Fig. 1, the cameras 320 are a group of cameras composed of four cameras 321 to 324. The camera 321 captures an image of an area B11, which is a part of the area B1, the camera 322 captures an image of an area B12, which is a part of the area B1, the camera 323 captures an image of an area B13, which is a part of the area B1, and the camera 324 captures an image of an area B14, which is a part of the area B1. Each of the cameras 321 to 324 has a communication function and transmits data such as a captured image to the server 200 via a network 500.

The server 200 monitors the vehicles 100 in the area A1 based on the captured images of the area A1 received from the cameras 310. The server 200 also monitors the vehicle 100 in the area B1 based on the captured images of the area B1 received from the cameras 320. For example, the server 200 monitors whether or not each of the vehicles 100 is moving on a scheduled route, or whether or not scheduled work is performed on each of the vehicles 100. Further, the server 200 controls movement of the vehicles 100 while estimating the positions of the vehicles 100 based on the captured images of the vehicle 100 received from the cameras 310 and 320.

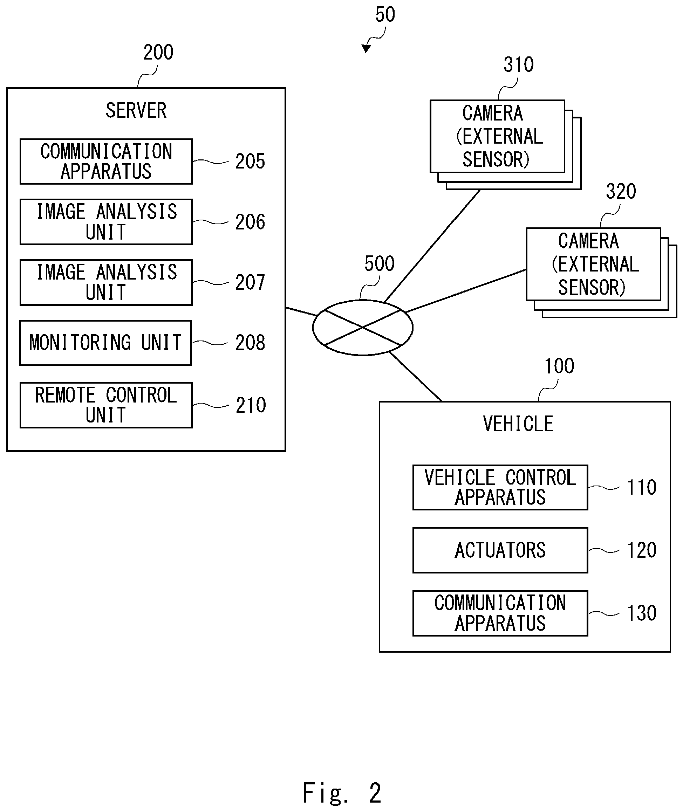

Next, a control system of the vehicle monitoring system 50 will be described with reference to Fig. 2. Fig. 2 is a block diagram showing the control system of the vehicle monitoring system 50.

As shown in Fig. 2, the server 200 includes at least a communication apparatus 205, an image analysis unit (a first image analysis unit) 206, an image analysis unit (a second image analysis unit) 207, a monitoring unit 208, and a remote control unit 210. Each of the vehicles 100 includes at least a vehicle control apparatus 110, actuators 120, and a communication apparatus 130. Note that the server 200 is not limited to being composed of a physically single apparatus, but may be composed of a plurality of distributed apparatuses. For example, the image analysis units 206 and 207 may be composed of physically single apparatuses or may be composed of apparatuses different from each other.

**In** the server 200, the communication apparatus 205 communicates with the cameras 310, the cameras 320, and each of the vehicles 100 via the network 500. For example, the communication apparatus 205 receives data such as captured images from the cameras 310 and 320 and transmits information about vehicle control to each of the vehicles 100.

The image analysis unit 206 analyzes the images captured by the cameras 310 which capture images of the area A1. Specifically, the communication apparatus 205 receives data such as captured images from the cameras 310 which capture images of the area A1. Then, the image analysis unit 206 analyzes the received images captured by the cameras 310, thereby specifying, for example, the external shapes of the vehicles 100 included in the captured images and the surrounding environments of the vehicles 100. By doing so, it is possible to specify the position and the orientation of each of the vehicles 100 in the area A1, the traveling state of each of the vehicles 100 in the area A1, etc.

Note that the plurality of the vehicle 100 in the area A1 are densely located and move continuously in formation. Therefore, the image analysis unit 206 analyzes all the images captured by four of the cameras 311 to 314 constituting a group of the cameras 310. Note that since it is highly likely that one of the vehicles 100 is always located in an area captured by each of the cameras 311 to 314, the image analysis unit 206 preferably analyzes all the images captured by the cameras 311 to 314 with a resolution higher than that with which the image analysis unit 207 described later analyzes the captured images.

The image analysis unit 207 analyzes the images captured by the cameras 320 which capture images of the area B1. Specifically, the communication apparatus 205 receives data such as captured images from the cameras 320 which capture images of the area B1. Then, the image analysis unit 207 analyzes the received images captured by the cameras 320, thereby specifying, for example, the external shapes of the vehicles 100 included in the captured images and the surrounding environments of the vehicles 100. By doing so, it is possible to specify the position and the orientation of each of the vehicles 100 in the area B1, the traveling state of each of the vehicles 100 in the area B1, etc.

Note that the vehicles 100 in the area B1 are not densely located and move intermittently one by one. Therefore, the image analysis unit 207 extracts only the captured images including the vehicles 100 from among the images captured by each of four of the cameras 321 to 324 constituting a group of the cameras 320, and analyzes them. Thus, the load on the analysis of images is reduced.

For example, when the image analysis unit 207 detects that the vehicle 100 has moved from the area C1 to the area B1 by analyzing an image captured by a camera (not shown) that captures an image of the area C1 (or when the image analysis unit 207 receives information indicating that the vehicle 100 has moved from the area C1 to the area B1), the image analysis unit 207 may perform processing for analyzing only an image captured by the camera 321 that captures an image of the area B11 near the entrance of the area B1. In this case, the image analysis unit 207 may predict the position of the vehicle 100 based on the moving speed of the vehicle 100 in the area B1, and may select a captured image on which image analysis is to be performed from among the images captured by the cameras 321 to 324 based on the predicted position of the vehicle 100. Alternatively, the image analysis unit 207 may perform processing for analyzing the images captured by the respective cameras 321 to 324 with a low resolution that allows it to detect whether or not the vehicle 100 is present, and when the image analysis unit 207 detects the vehicle 100, it may switch to a higher resolution only for processing for analyzing the captured image including the vehicle 100.

Further, in the area B1, the accuracy of estimation of the position of each of the vehicles is not required to be higher than that required in the area A1. Therefore, the image analysis unit 207 may be configured to analyze the captured image with a resolution lower than that with which the image analysis unit 206 analyzes the captured image. By this configuration, the load on the analysis of images is further reduced.

The monitoring unit 208 monitors the plurality of the vehicles 100 based on a result of the analysis of the images by each of the image analysis units 206 and 207. For example, the monitoring unit 208 monitors whether or not each of the vehicles 100 is moving on a scheduled route, or whether or not scheduled work is performed on each of the vehicles 100.

The remote control unit 210 remotely controls each of the vehicles 100 by transmitting information about vehicle control to each of the vehicles 100 based on a result of the monitoring by the monitoring unit 208 (including position information of each of the vehicles 100). Specifically, the communication apparatus 205 transmits information about vehicle control instructed by the remote control unit 210 to each of the vehicles 100. In each of the vehicles 100, the communication apparatus 130 receives information about the vehicle control from the server 200, and the vehicle control apparatus 110 causes the actuators 120 to travel the vehicle in accordance with the received information related to the vehicle control.

As described above, in the vehicle monitoring system 50 according to the present disclosure, processing for analyzing captured images in an area where the plurality of the vehicles 100 intermittently move one by one is limited as compared to processing for analyzing captured images in an area where the plurality of the vehicles 100 continuously move in formation, whereby it is possible to reduce the load on the image analysis processing, that is, the load on monitoring processing.

Traveling control examples for controlling traveling of the vehicle 100 in a system 50, which is related to the manufacturing of vehicles and includes the vehicle monitoring system described above, will be described below.

### <A. Traveling Control Example 1>

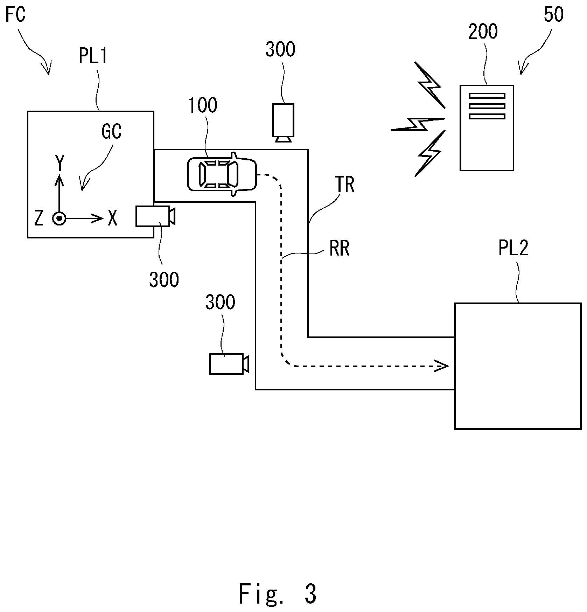

Fig. 3 is a conceptual diagram showing a configuration of the system 50 according to a traveling control example 1. The system 50 includes one or more of the vehicles 100 as a mobile body (bodies), the server 200, and one or more of the external sensors 300.

Note that, when the mobile body is other than a vehicle, the term "vehicle" or "car" in the present disclosure may be replaced by a "mobile body" as appropriate, and the term "travel" may be replaced by "move" as appropriate.

The vehicle 100 is configured to be able to travel by unmanned driving. The "unmanned driving" means driving that is not dependent on a driver's traveling operation. The traveling operation means an operation regarding at least one of "running", "turning", and "stopping" of the vehicle 100. The unmanned driving is achieved by automatic or manual remote control that uses an apparatus located outside the vehicle 100, or by autonomous control of the vehicle 100. Any passenger who does not perform the traveling operation may ride in the vehicle 100 traveling by unmanned driving. Examples of the passenger who does not perform the traveling operation include a person who is just sitting on a seat of the vehicle 100 and a person who is performing work different from the traveling operation, such as assembly, inspection, or an operation of switches, while riding in the vehicle 100. Note that the driving by the traveling operation of the passenger may be referred to as "manned driving".

**In** this specification, the "remote control" includes "full remote control" in which all the operations of the vehicle 100 are completely determined from the outside of the vehicle 100 and "partial remote control" in which some of the operations of the vehicle 100 are determined from the outside of the vehicle 100. Further, "autonomous control" includes "full autonomous control" in which the vehicle 100 autonomously controls its own operation without receiving any piece of information from an apparatus located outside the vehicle 100 and "partial autonomous control" in which the vehicle 100 autonomously controls its own operation using information received from an apparatus located outside the vehicle 100.

**In** this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of the external sensors 300 are installed along the traveling path TR in the factory FC. The positions of the respective external sensors 300 in the factory FC are adjusted in advance. The vehicle 100 moves from the first place PL1 to the second place PL2 along the traveling path TR by unmanned driving.

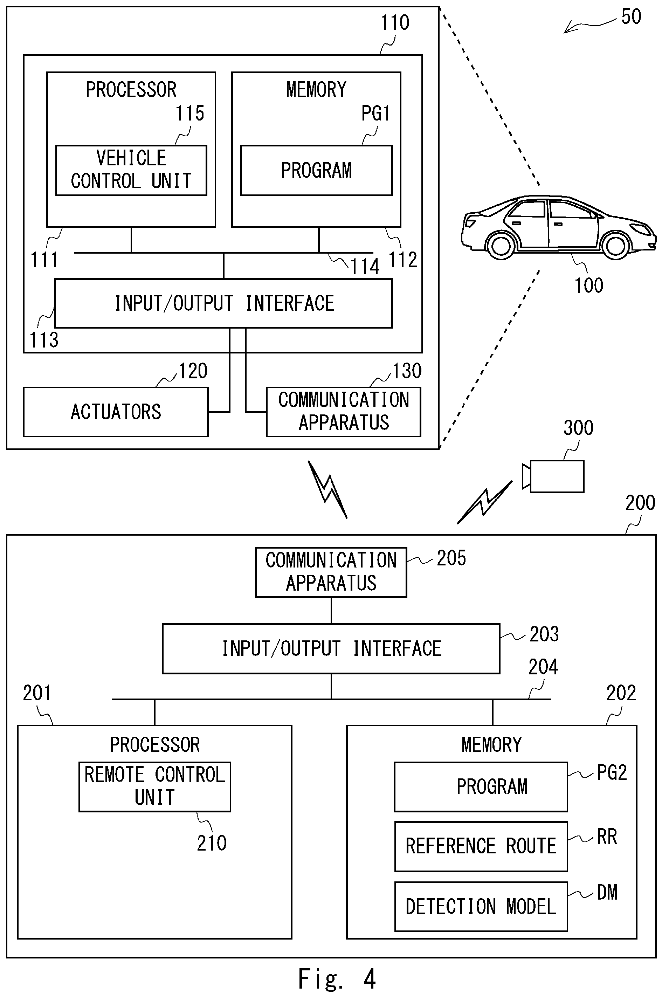

Fig. 4 is a block diagram showing the configuration of the system 50. The vehicle 100 includes the vehicle control apparatus 110 for controlling each part of the vehicle 100, the actuators 120 including one or more actuators that drive under a control of the vehicle control apparatus 110, and the communication apparatus 130 for communicating with an external apparatus such as the server 200 by wireless communication. The actuators 120 include an actuator of a driving apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a traveling control signal received from the server 200. The traveling control signal is a control signal for causing the vehicle 100 to travel. In this embodiment, the traveling control signal includes an acceleration and a steering angle of the vehicle 100 as parameters. In another embodiment, the traveling control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. The communication apparatus 205 for communicating with various types of apparatuses located outside the server 200 is connected to the input/output interface 203. The communication apparatus 205 can communicate with the vehicle 100 by wireless communication and can communicate with each of the external sensors 300 by wired communication or wireless communication. The processor 201 executes a program PG2 stored in the memory 202, thereby implementing various functions including a function as the remote control unit 210.

The remote control unit 210 acquires results of detection by the sensors, generates a traveling control signal for controlling the actuators 120 of the vehicle 100 using the results of the detection, and transmits the generated traveling control signal to the vehicle 100, thereby causing the vehicle 100 to travel by remote control. Further, the remote control unit 210 may generate not only the traveling control signal but also, for example, control signals for controlling actuators for operating various types of auxiliary devices provided in the vehicle 100 or various types of equipment such as windshield wipers, power windows, or lamps. That is, the remote control unit 210 may operate these various types of equipment or various types of auxiliary devices by remote control. Note that the remote control unit 210 may include the functions of the image analysis units 206 and 207 and the monitoring unit 208 shown separately from the remote control unit 210 in Fig. 2.

The external sensor 300 is a sensor located outside the vehicle 100. The external sensor 300 according to this embodiment is a sensor that captures the vehicle 100 from the outside of the vehicle 100. The external sensor 300 includes a communication apparatus (not shown) and can communicate with other apparatuses such as the server 200 by wired communication or wireless communication.

Specifically, the external sensor 300 is composed of a camera. The camera as the external sensor 300 captures an image including the vehicle 100, and outputs the captured image as a result of detection.

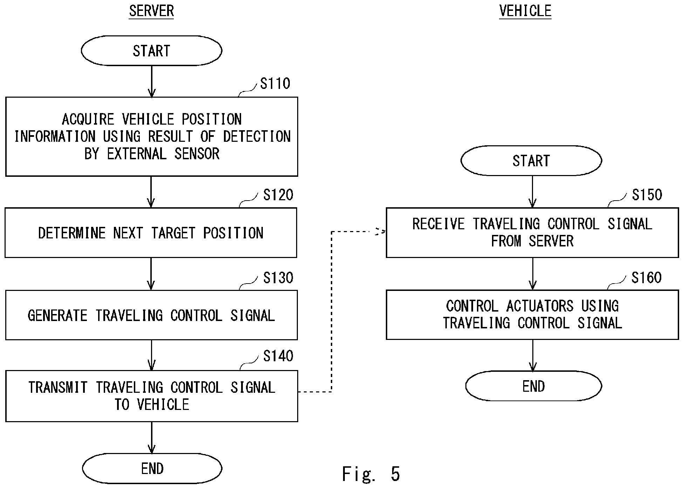

Fig. 5 is a flowchart showing a processing procedure of traveling control of the vehicle 100 according to the traveling control example. In the processing procedure shown in Fig. 5, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using a result of detection output from the external sensor 300. The vehicle position information is position information based on which a traveling control signal is generated. In this embodiment, the vehicle position information includes the position and the orientation of the vehicle 100 in the global coordinate system GC of the factory FC. Specifically, in Step S110, the processor 201 acquires the vehicle position information using the captured image acquired from the camera, which is the external sensor 300.

Specifically, in Step S110, the processor 201 detects, for example, the external shape of the vehicle 100 from the captured image, calculates a coordinate system of the captured image, that is, coordinates of positioning points of the vehicle 100 in a local coordinate system, and converts the calculated coordinates into coordinates in the global coordinate system GC, thereby acquiring the position of the vehicle 100. The external shape of the vehicle 100 included in the captured image can be detected, for example, by inputting the captured image to a detection model DM that uses artificial intelligence. The detection model DM is prepared, for example, in the system 50 or in the outside of the system 50 and is stored in the memory 202 of the server 200 in advance. Examples of the detection model DM include a trained machine learning model that has been trained so as to implement one of semantic segmentation and instance segmentation. For example, convolutional neural network (hereinafter referred to as CNN) trained by supervised learning using a learning dataset may be used as this machine learning model. The learning dataset includes, for example, a plurality of training images including the vehicle 100, and a label indicating whether each area in the training image is an area indicating the vehicle 100 or an area indicating something other than the vehicle 100. When CNN learning is performed, parameters of the CNN are preferably updated in such a way that the error between the result output by the detection model DM and the label is reduced by backpropagation. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines a target position to which the vehicle 100 should go next. In this embodiment, the target position is expressed by coordinates of X, Y, and Z in the global coordinate system GC. The memory 202 of the server 200 stores in advance a reference route RR, which is a route along which the vehicle 100 should travel. The route is expressed by a node indicating a departure place, nodes indicating passage points, a node indicating a destination, and links connecting the respective nodes. The processor 201 determines the target position to which the vehicle 100 should go next using the vehicle position information and the reference route RR. The processor 201 determines a position ahead of the current position of the vehicle 100 on the reference route RR as the target position.

In Step S130, the processor 201 of the server 200 generates a traveling control signal for causing the vehicle 100 to travel toward the determined target position. The processor 201 calculates a traveling speed of the vehicle 100 from the transition of the positions of the vehicle 100 and compares the calculated traveling speed with a target speed. In general, when the traveling speed is lower than the target speed, the processor 201 determines the acceleration in such a way that the vehicle 100 accelerates, while when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration in such a way that the vehicle 100 is prevented from being deviated from the reference route RR, while when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated traveling control signal to the vehicle 100. The processor 201 repeats, in a predetermined cycle, acquisition of the position of the vehicle 100, determination of the target position, generation of a traveling control signal, transmission of the traveling control signal, and the like.

In Step S150, the processor 111 of the vehicle 100 receives the traveling control signal transmitted from the server 200. In Step S160, the processor 111 of the vehicle 100 controls the actuators 120 using the received traveling control signal, thereby causing the vehicle 100 to travel at the acceleration and the steering angle indicated in the traveling control signal. The processor 111 repeats reception of the traveling control signal and control of the actuators 120 in a predetermined cycle. By the system 50 according to this example, it is possible to cause the vehicle 100 to travel by remote control and thus to move the vehicle 100 without using conveyance equipment such as cranes or conveyors.

### <B: Traveling Control Example 2>

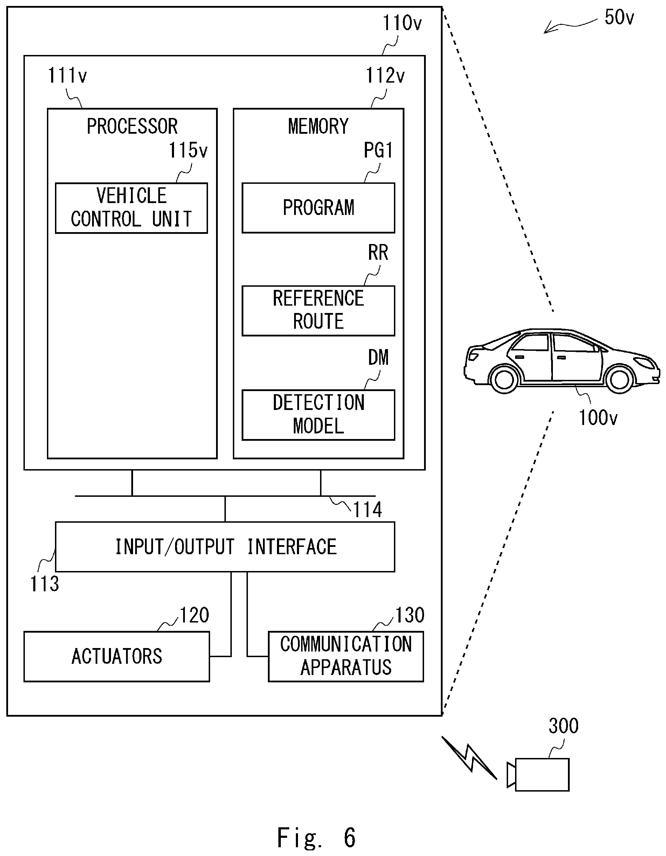

Fig. 6 is an explanatory diagram showing a schematic configuration of a system 50v according to a traveling control example 2. In this example, the system 50v is different from the system 50 according to the traveling control example 1 in that the system 50v does not include the server 200. Further, a vehicle 100v has a configuration in which it can travel under its autonomous control. The other configurations are the same as those stated above unless otherwise specified.

In this example, a processor 111v of a vehicle control apparatus 110v functions as a vehicle control unit 115v by executing the program PG1 stored in a memory 112v. The vehicle control unit 115v acquires a result output by a sensor, generates a traveling control signal using the output result, and outputs the generated traveling control signal to operate the actuators 120, thereby enabling the vehicle 100v to travel by autonomous control. In this example, the memory 112v stores in advance the detection model DM and the reference route RR in addition to the program PG1.

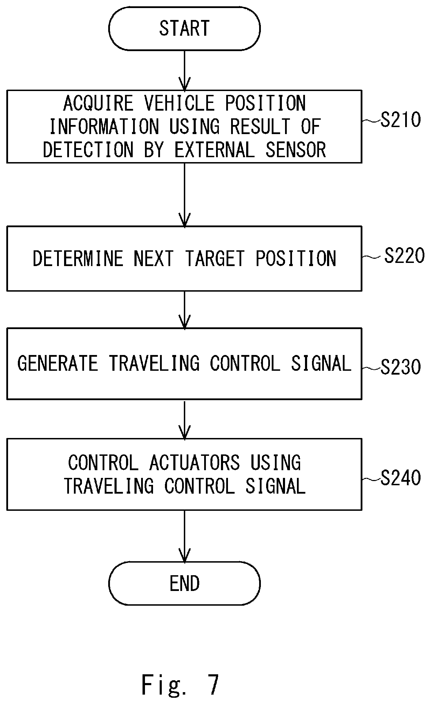

Fig. 7 is a flowchart showing a processing procedure of traveling control of the vehicle 100v according to the traveling control example 2. In the processing procedure shown in Fig. 7, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the external sensor 300. In Step S220, the processor 111v determines a target position to which the vehicle 100v should go next. In Step S230, the processor 111v generates a traveling control signal for causing the vehicle 100v to travel toward the determined target position. In Step S240, the processor 111v controls the actuators 120 using the generated traveling control signal, thereby causing the vehicle 100v to travel in accordance with parameters indicated in the traveling control signal. The processor 111v repeats acquisition of the vehicle position information, determination of the target position, generation of a traveling control signal, and control of the actuators in a predetermined cycle. By the system 50v according to this example, it is possible to cause the vehicle 100v to travel by autonomous control of the vehicle 100v without remotely controlling the vehicle 100v by the server 200.

### YY: Other Traveling Control Examples

(YY1) In the above examples, the external sensor 300 is a camera. However, the external sensor 300 may not be a camera, and may instead be, for example, Light Detection And Ranging (LiDAR). In this case, the result of the detection output from the external sensor 300 may be three dimensional point cloud data indicating the vehicle 100. In this case, the server 200 and the vehicle 100 may acquire the vehicle position information by template matching that uses three dimensional point cloud data obtained as the result of the detection and reference point cloud data prepared in advance.

(YY2) **In** the traveling control example 1, the server 200 executes processes from the acquisition of the vehicle position information to the generation of a traveling control signal. However, the vehicle 100 may execute at least some of the processes from the acquisition of the vehicle position information to the generation of a traveling control signal. For example, the following forms (1) to (3) may be employed.
(1) The server 200 may acquire vehicle position information, determine a target position to which the vehicle 100 should go next, and generate a route from the current position of the vehicle 100 indicated in the acquired vehicle position information to the target position. The server 200 may generate a route to the target position between the current position and the destination or may generate a route to the destination. The server 200 may transmit the generated route to the vehicle 100. The vehicle 100 may generate a traveling control signal for causing the vehicle 100 to travel along the route received from the server 200, and control the actuators 120 using the generated traveling control signal.
(2) The server 200 may acquire vehicle position information and transmit the acquired vehicle position information to the vehicle 100. The vehicle 100 may determine a target position to which the vehicle 100 should go next, generate a route from the current position of the vehicle 100 indicated in the received vehicle position information to the target position, generate a traveling control signal for causing the vehicle 100 to travel along the generated route, and control the actuators 120 using the generated traveling control signal.
(3) **In** the above forms (1) and (2), an internal sensor may be mounted on the vehicle 100, and a result of detection output from the internal sensor may be used in at least one of the generation of a route or the generation of a traveling control signal. The internal sensor is a sensor mounted on the vehicle 100. Examples of the internal sensor may include a sensor that detects a motion state of the vehicle 100, a sensor that detects an operation state of each part of the vehicle 100, and a sensor that detects an environment near the vehicle 100. Specifically, examples of the internal sensor may include a camera, LiDAR, a millimeter wave radar, an ultrasonic sensor, a GPS sensor, an acceleration sensor, and a gyro sensor. For example, in the above form (1), the server 200 may acquire a result of detection by the internal sensor, and reflect the result of the detection by the internal sensor in a route when the route is generated. **In** the above form (1), the vehicle 100 may acquire a result of detection by the internal sensor, and reflect the result of the detection by the internal sensor in a traveling control signal when the traveling control signal is generated. **In** the above form (2), the vehicle 100 may acquire a result of detection by the internal sensor, and reflect the result of the detection by the internal sensor in a route when the route is generated. **In** the above form (2), the vehicle 100 may acquire a result of detection by the internal sensor, and reflect the result of the detection by the internal sensor in a traveling control signal when the traveling control signal is generated.

(YY3) **In** the traveling control example 2, an internal sensor may be mounted on the vehicle 100v and a result of detection output from the internal sensor may be used in at least one of the generation of a route and the generation of a traveling control signal. For example, the vehicle 100v may acquire a result of detection by the internal sensor, and reflect the result of the detection by the internal sensor in a route when the route is generated. The vehicle 100v may acquire the result of the detection by the internal sensor and reflect the result of the detection by the internal sensor in a traveling control signal when the traveling control signal is generated.

(YY4) In the traveling control example 2, the vehicle 100v acquires vehicle position information using a result of detection by the external sensor 300. However, an internal sensor may be mounted on the vehicle 100v, and the vehicle 100v may acquire vehicle position information using a result of detection by the internal sensor, determine a target position to which the vehicle 100v should go next, generate a route from the current position of the vehicle 100v indicated in the acquired vehicle position information to the target position, generate a traveling control signal for the vehicle 100v to travel along the generated route, and control the actuators 120 using the generated traveling control signal. In this case, the vehicle 100v may travel without using any result of the detection by the external sensor 300. Note that the vehicle 100v may acquire a target arrival time and congestion information from the outside of the vehicle 100v and reflect the target arrival time and the congestion information in at least one of the route and the traveling control signal. Further, all the functional configurations of the system 50v may be provided in the vehicle 100v. That is, the processes implemented by the system 50v in the present disclosure may be implemented by the vehicle 100v alone.

(YY5) In the traveling control example 1, the server 200 automatically generates a traveling control signal to be transmitted to the vehicle 100. However, the server 200 may generate a traveling control signal to be transmitted to the vehicle 100 in accordance with an operation performed by an external operator present outside the vehicle 100. For example, the external operator may operate a controlling apparatus including a display for displaying a captured image output from the external sensor 300, a steering, an accelerator pedal, and a brake pedal for remotely controlling the vehicle 100, and a communication apparatus for communicating with the server 200 by wired communication or wireless communication, and the server 200 may generate a traveling control signal corresponding to the operation performed with regard to the controlling apparatus.

(YY6) **In** each of the above traveling control examples, the vehicle 100 only needs to have a configuration in which it can move by unmanned driving, and a form of the platform of the vehicle 100 may have, for example, configurations described below. Specifically, the vehicle 100 only needs to include at least the vehicle control apparatus 110 and the actuators 120 in order to perform three functions of "running", "turning", and "stopping" by unmanned driving. **In** a case where the vehicle 100 externally acquires information for unmanned driving, the vehicle 100 may further include the communication apparatus 130. That is, the vehicle 100 that can move by unmanned driving may not be provided with at least some of interior components such as a driving seat and a dashboard, at least some of exterior components such as a bumper and a fender, and a body shell. **In** this case, the unmounted components such as the body shell may be mounted on the vehicle 100 before the vehicle 100 is shipped from the factory FC, or the unmounted components such as the body shell may be mounted on the vehicle 100 after the vehicle 100 is shipped from the factory FC in a state in which the unmounted components such as the body shell are not mounted on the vehicle 100. The components may be mounted on the vehicle 100 from desired directions thereof, for example, from an upper side, a lower side, a front side, a rear side, a right side, or a left side thereof. They may also be mounted on the vehicle 100 from the same direction or from different directions. Note that regarding the form of the platform, the position may be determined like in the case of the vehicle 100 according to the first embodiment.

(YY7) The vehicle 100 may be manufactured by combining a plurality of modules with one another. The module means a unit formed of a plurality of components grouped in accordance with a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may instead be two or smaller or four or larger. Further, in addition to or in place of the components that form the platform, components of the vehicle 100 that form the parts thereof other than the platform may be formed in the form of a module. Further, the above various modules may include any exterior components such as a bumper or a grill or any interior components such as seats and a console. Further, not only the vehicle 100 but also a mobile body of any form may be manufactured by combining a plurality of modules with one another. Each of these modules may be manufactured, for example, by joining a plurality of components by welding, fixtures, or the like, or may be manufactured by integrally molding at least some of the components that form the module as one component by casting. A molding method for integrally molding components as one component, in particular, as a relatively large-sized component, is also referred to as giga casting or mega casting. For example, the above-described front module, central module, and rear module may be manufactured using giga casting.

(YY8) Conveyance of the vehicle 100 using the traveling of the vehicle 100 by unmanned driving is also referred to as "self-propelled conveyance". Further, a configuration for achieving the self-propelled conveyance is referred to as a "vehicle remote control autonomous traveling conveyance system". Further, a production method for producing the vehicles 100 using the self-propelled conveyance is also referred to as "self-propelled production". In the self-propelled production, for example, in the factory FC that manufactures the vehicles 100, a part of the conveyance of the vehicle 100 is achieved by the self-propelled conveyance.

(YY9) In each of the above traveling control examples, some or all of the functions and the processes implemented in the form of software may be implemented in the form of hardware. Further, some or all of the functions and the processes implemented in the form of hardware may be implemented in the form of software. For example, various types of circuits such as an integrated circuit or a discrete circuit may be used as hardware for implementing various types of functions in each of the above embodiments.

Note that, in the present disclosure, some or all of the processes performed in the external sensor 300, the vehicle 100, the server 200, etc. described above can be implemented by causing a Central Processing Unit (CPU) to execute a computer program.

The above-described program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a Random-Access Memory (RAM), a Read-Only Memory (ROM), a flash memory, a Solid-State Drive (SSD) or other types of memory technologies, a CD-ROM, a Digital Versatile Disc (DVD), a Blu-ray (Registered Trademark) disc or other types of optical disc storage, a magnetic cassette, a magnetic tape, and a magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

Although the present disclosure has been described with reference to embodiments, the present disclosure is not limited to the above-described embodiments. Various changes that may be understood by those skilled in the art may be made to the configurations and details of the present disclosure within the scope of the present disclosure. Further, each of the embodiments may be combined with at least one of the other embodiments as appropriate.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle monitoring system (50) comprising:
a plurality of first cameras (311, 312, 313, 314) each configured to capture an image of a corresponding one of a plurality of first divided areas (A11, A12, A13, A14) that constitute a first area (A1) where a plurality of vehicles (100) continuously move;
a plurality of second cameras (321, 322, 323, 324) each configured to capture an image of a corresponding one of a plurality of second divided areas (B11, B12, B13, B14) that constitute a second area (B1) where a plurality of vehicles (100) intermittently move;
a first image analysis unit (206) configured to analyze the captured images captured by the plurality of respective first cameras (311, 312, 313, 314);
a second image analysis unit (207) configured to extract the captured image including the vehicle (100) from among the captured images captured by the plurality of respective second cameras (321, 322, 323, 324) and analyze the extracted captured image; and
a monitoring unit (208) configured to monitor the plurality of vehicles (100) based on a result of the analysis of the images by each of the first image analysis unit (206) and the second image analysis unit (207).

2. The vehicle monitoring system (50) according to claim 1, wherein the second image analysis unit (207) extracts only the captured image including the vehicle (100) from among the captured images captured by the plurality of respective second cameras (321, 322, 323, 324) and analyze the extracted captured image.

3. The vehicle monitoring system (50) according to claim 1, wherein
the first area (A1) is an area where predetermined work is performed on each of the plurality of vehicles (100), and
the second area (B1) is an area through which each of the plurality of vehicles (100) passes without predetermined work being performed on each of the plurality of vehicles (100).

4. The vehicle monitoring system (50) according to claim 3, wherein the second image analysis unit (207) analyzes the captured image with a resolution lower than a resolution with which the first image analysis unit (206) analyzes the captured image.

5. The vehicle monitoring system (50) according to claim 1, wherein each of the plurality of vehicles (100) is configured to be movable by unmanned driving.
